# EUROPÄISCHE PATENTSCHRIFT

(11) **EP 4 031 839 B1**
(45) Veröffentlichungstag und Bekanntmachung des Hinweises auf die Patenterteilung: **06.09.2023**
(21) Anmeldenummer: 20742673.5
(22) Anmeldetag: 14.07.2020
(51) Int. Cl.: G01D 5/20, G01L 3/14

(54) **MESSEINRICHTUNG**
MEASURING DEVICE
DISPOSITIF DE MESURE

(30) Priorität: 18.09.2019 DE 102019214219
(43) Veröffentlichungstag der Anmeldung: 27.07.2022
(73) Patentinhaber: Dr. Johannes Heidenhain GmbH, 83301 Traunreut (DE)
(72) Erfinder: AUER, Daniel, 83278 Traunstein (DE); HEINEMANN, Christoph, 83349 Palling (DE); TIEMANN, Marc Oliver, 83329 Waging am See (DE)
(86) Internationale Anmeldenummer: PCT/EP2020/069819
(87) Internationale Veröffentlichungsnummer: WO 2021/052651

(56) Entgegenhaltungen:
- EP-A2- 2 447 690
- DE-A1-102018 200 234
- DE-U1- 29 724 833

## Beschreibung

### GEBIET DER TECHNIK

Die Erfindung betrifft eine Messeinrichtung zur Bestimmung von relativen Winkelstellungen und eines Drehmoments gemäß dem Anspruch 1.

Derartige Messeinrichtungen werden beispielsweise als Drehgeber zur Bestimmung der Winkellage zweier relativ zueinander drehbaren Maschinenteile verwendet. Bei Messeinrichtungen, die auf einem induktiven Messprinzip beruhen, sind Erregerspulen und Empfängerspulen etwa in Form von Leiterbahnen auf einer gemeinsamen Leiterplatte beziehungsweise auf einemgemeinsamen Substrat aufgebracht, die (beziehungsweise das) beispielsweise mit einem Stator eines Drehgebers fest verbunden ist. Dieser Leiterplatte gegenüber befindet sich ein Skalenelement, auf dem in periodischen Abständen alternierend elektrisch leitfähige und nichtleitfähige Flächen als Teilungsbereich beziehungsweise Teilungsstruktur aufgebracht sind, und welche mit dem Rotor des Drehgebers drehfest verbunden ist. Wenn an den Erregerspulen ein zeitlich wechselnder elektrischer Erregerstrom angelegt wird, werden in den Empfängerspulen während der Relativdrehung zwischen Rotor und Stator von der Winkellage abhängige Signale erzeugt. Diese Signale werden dann in einer Auswerteelektronik weiterverarbeitet.

Häufig werden derartige Messeinrichtungen als Messgeräte für elektrische Antriebe zur Bestimmung der Relativbewegung bzw. der Relativlage von entsprechenden Maschinenteilen beispielsweise in Robotergelenken eingesetzt. In diesem Fall werden die Winkelpositionswerte, welche von Abtastbauteilen erzeugt werden, einer Folgeelektronik zur Ansteuerung der Antriebe über eine entsprechende Schnittstellenanordnung zugeführt.

### STAND DER TECHNIK

In der EP 2 447 690 A2 wird eine Messeinrichtung beschrieben, bei der an einer Welle magnetische Pole hergestellt wurden zur Messung der Winkelstellung. Weiterhin sind an dieser Welle kraftempfindliche Bereiche eingerichtet, die kraftabhängig die Magnetfelder beeinflussen, so dass auch ein Drehmoment messbar ist.

Aus dem Gebrauchsmuster DE 297 24 833 U1 ist eine induktive Positionsmesseinrichtung bekannt, die ein Abtastelement und ein relativ zum Abtastelement drehbares Teilungselement aufweist.

In der DE 10 2018 200 234 A1 wird ein induktives Sensorsystem beschrieben, welches zwei Geberräder und ein Sensorelement umfasst, wobei durch das Sensorelement eine Verdrehung des ersten Geberrads relativ zum zweiten Geberrad bestimmt wird.

### ZUSAMMENFASSUNG DER ERFINDUNG

Der Erfindung liegt die Aufgabe zugrunde, eine vergleichsweise einfach herstellbare Messeinrichtung zu schaffen, durch die eine verbesserte Messung einer Winkelstellung zusammen mit einem Drehmoment ermöglicht wird.

Diese Aufgabe wird erfindungsgemäß durch die Merkmale des Anspruches 1 gelöst.

Die erfindungsgemäße Messeinrichtung umfasst eine erste Bauteilgruppe und eine zweite Bauteilgruppe, wobei die Bauteilgruppen relativ zueinander um eine Achse drehbar angeordnet sind. Die erste Bauteilgruppe weist ein Abtastbauteil auf, welches seinerseits ein erstes Substrat aufweist, das insbesondere ein Abtastelement aufweist beziehungsweise auf dem insbesondere ein Abtastelement angeordnet ist. Die zweite Bauteilgruppe weist ein Skalenbauteil auf, welches ein zweites Substrat und eine Winkelskala aufweist, so dass durch die Messeinrichtung eine relative Winkelstellung zwischen der ersten Bauteilgruppe und der zweiten Bauteilgruppe bestimmbar ist. Die Messeinrichtung weist zudem eine passive Sensoranordnung auf, welche Leiterbahnstrukturen aufweist. Weiterhin sind am Abtastbauteil die Leiterbahnstrukturen durch einen additiven Aufbau auf dem ersten Substrat aufgebracht, so dass durch die Sensoranordnung eine Torsionsbelastung des ersten Substrats um die Achse bestimmbar ist. Alternativ hierzu sind die Leiterbahnstrukturen durch einen additiven Aufbau am Skalenbauteil auf dem zweiten Substrat aufgebracht, so dass durch die Sensoranordnung eine Torsionsbelastung des zweiten Substrats um die Achse bestimmbar ist.

Als passive Sensoranordnung ist hier insbesondere eine Sensoranordnung zu verstehen, die passive Sensoren beziehungsweise passive Bauteile enthält, deren Parameter durch die Torsionsbelastung verändert werden. Durch elektronische Bauelemente werden diese Parameter in elektrische Signale vorzugsweise innerhalb der Messeinrichtung umgeformt. Für den Betrieb der passiven Sensoranordnung wird eine von außen zugeführte Hilfsenergie insbesondere in Form elektrischer Energie benötigt. Als Parameter kann hier insbesondere der elektrische Widerstand beziehungsweise die elektrischen Widerstände der Leiterbahnstrukturen dienen. Um den elektrischen Widerstand beziehungsweise eine Widerstandsänderung messen zu können, muss die Sensoranordnung, insbesondere auch die Leiterbahnstrukturen, von einem elektrischen Strom durchflossen sein, so dass also die Sensoranordnung im Betrieb von außen mit elektrischer Energie versorgt werden muss. Die Leiterbahnstrukturen reagieren auf eine Torsionsbelastung durch Längen- beziehungsweise Querschnittsänderungen, was Auswirkungen auf deren elektrischen Widerstand hat.

Die Leiterbahnstrukturen sind durch einen additiven Aufbau auf dem ersten oder auf dem zweiten Substrat hergestellt. Im Zuge der Herstellung eines derartigen additiven Aufbaus werden Schichten großflächig oder strukturiert (z. B. Lift-off-Verfahren) auf dem betreffenden Substrat aufgebracht. Dies geschieht etwa durch eine chemische Reaktion oder Kondensation von gasförmigen Stoffen auf Oberfläche des betreffenden Substrats. Alternativ kann der additive Aufbau auch durch Abscheidung aus einer flüssigen Phase erzeugt werden. Insbesondere ist unter dem Begriff "additiver Aufbau" nicht zu verstehen, dass die Leiterbahnstrukturen auf dem ersten oder zweiten Substrat aufgeklebt sind.

Insbesondere können die Leiterbahnstrukturen auf einer ebenen Fläche des ersten oder des zweiten Substrats angeordnet sein. Ebenso kann das Abtastelement auf einer ebenen Fläche des ersten Substrats und / oder die Winkelskala auf einer ebenen Fläche des zweiten Substrats angeordnet sein.

Besonders vorteilhaft ist eine mögliche Ausgestaltung der Erfindung, bei der die Leiterbahnstrukturen der Sensoreinheit und die übrigen Leiterbahnstrukturen zur Anbindung von elektronischen Bauelementen auf dem betreffenden Substrat mit ein und demselben Prozess hergestellt wurden. Zudem kann mit demselben Prozess auch die Winkelskala hergestellt sein.

Das Abtastbauteil und das Skalenbauteil können mit einem axialen Spalt zueinander angeordnet sein, also mit einem Spalt der eine Ausdehnung in Richtung der Achse aufweist, um welche die Bauteilgruppen relativ zueinander drehbar sind. Die ebene Fläche, auf der die Leiterbahnstrukturen angeordnet sind, ist vorzugsweise orthogonal zur Achse, um welche die Bauteilgruppen relativ zueinander drehbar sind, angeordnet.

In vorteilhafter Ausgestaltung der Erfindung weisen die Leiterbahnstrukturen jeweils mehrere Abschnitte auf, in denen die Leiterbahnstrukturen gekrümmt verlaufen.

Mit Vorteil verlaufen die Leiterbahnstrukturen in den Abschnitten parallel.

In weiterer Ausgestaltung der Erfindung ist der Krümmungsradius der Leiterbahnstrukturen in den Abschnitten in Abhängigkeit vom Abstand zur Achse unterschiedlich. Insbesondere wird der Krümmungsradius mit zunehmenden Abstand zur Achse größer.

Mit Vorteil schneiden die Leiterbahnstrukturen in den Abschnitten Kreislinien, die unterschiedliche Radien aufweisen können, aber deren Mittelpunkt auf der Achse liegt, jeweils in einem gleich großen Winkel. Insbesondere ist der Winkel zwischen der Tangente auf der Kreislinie und der Tangente der Leiterbahnstruktur im Schnittpunkt in den Abschnitten an verschiedenen Stellen stets gleich groß. Die Leiterbahnstrukturen verlaufen mit Vorteil in den Abschnitten jeweils gemäß einer logarithmischen Spirale.

In vorteilhafter Ausgestaltung der Erfindung beträgt der Winkel zwischen 20° und 70°, insbesondere zwischen 30° und 60°, vorteilhafterweise zwischen 40° und 50°.

In weiterer Ausgestaltung der Erfindung kann die Torsionsbelastung durch Bestimmung des Widerstandes der Leiterbahnstrukturen bestimmt werden.

Mit Vorteil umfasst die Sensoranordnung vier Leiterbahnstrukturen, die gemäß einer Brückenschaltung verschaltet sind. Insbesondere kann eine Wheatstone'sche Messbrücke implementiert werden, die beispielsweise zur Bestimmung des mittleren ohmschen Widerstands der Leiterbahnstrukturen verwendet wird.

In vorteilhafter Ausgestaltung der Erfindung sind auf dem ersten Substrat zumindest eine Erregerleiterbahn sowie als Abtastelement zumindest eine Empfängerspur mit mehreren Empfängerleiterbahnen angeordnet. Eine entsprechende Anordnung zur Bestimmung der relativen Winkelstellung beruht insbesondere auf einem induktiven Messprinzip.

Die Erfindung ist aber nicht grundsätzlich auf eine Messeinrichtung beschränkt, bei der die Bestimmung der relativen Winkelstellung auf einem induktiven Messprinzip beruht. Vielmehr können in diesem Zusammenhang beispielsweise auch optische oder magnetische Messprinzipien zur Anwendung kommen.

Mit Vorteil ist auf dem ersten Substrat zumindest ein elektronisches Bauelement angeordnet, durch welches Signale, die vom Abtastbauteil erzeugbar sind, weiterverarbeitbar sind.

Weiterhin kann die Winkelskala aus alternierend angeordneten, elektrisch leitfähigen und nichtleitfähigen Teilungsbereichen bestehen, die auf dem zweiten Substrat angeordnet sind.

In weiterer Ausgestaltung der Erfindung ist das erste Substrat oder das zweite Substrat oder sind das erste Substrat und das zweite Substrat aus Kunststoff hergestellt.

Alternativ kann das erste Substrat oder das zweite Substrat oder können das erste Substrat und das zweite Substrat aus Metall, insbesondere aus Stahl oder Aluminium hergestellt sein.

Mit Vorteil sind am Abtastbauteil die Leiterbahnstrukturen der Sensoranordnung, insbesondere die besagten Abschnitte, bezüglich der Achse radial innen liegend relativ zu einem Abtastelement auf dem ersten Substrat aufgebracht. Demnach sind also die Leiterbahnstrukturen näher an der Achse als das Abtastelement.

In weiterer Ausgestaltung der Erfindung sind am Skalenbauteil die Leiterbahnstrukturen bezüglich der Achse radial innen liegend relativ zur Winkelskala auf dem zweiten Substrat aufgebracht. Mithin sind also in diesem Fall die Leiterbahnstrukturen näher an der Achse als die Winkelskala.

Vorteilhafte Ausbildungen der Erfindung entnimmt man den abhängigen Ansprüchen.

Weitere Einzelheiten und Vorteile der erfindungsgemäßen Messeinrichtung ergeben sich aus der nachfolgenden Beschreibung zweier Ausführungsbeispiele anhand der beiliegenden Figuren.

### KURZE BESCHREIBUNG DER ZEICHNUNGEN

Es zeigen die
- Figur 1: eine Schnittdarstellung durch eine Messeinrichtung,
- Figur 2: eine Draufsicht auf ein Skalenbauteil,
- Figur 3: eine Detailansicht auf eine Sensoranordnung,
- Figur 4: eine Draufsicht auf ein Abtastbauteil,
- Figur 5: eine Draufsicht auf ein Abtastbauteil gemäß einem zweiten Ausführungsbeispiel.

### BESCHREIBUNG DER AUSFÜHRUNGSFORMEN

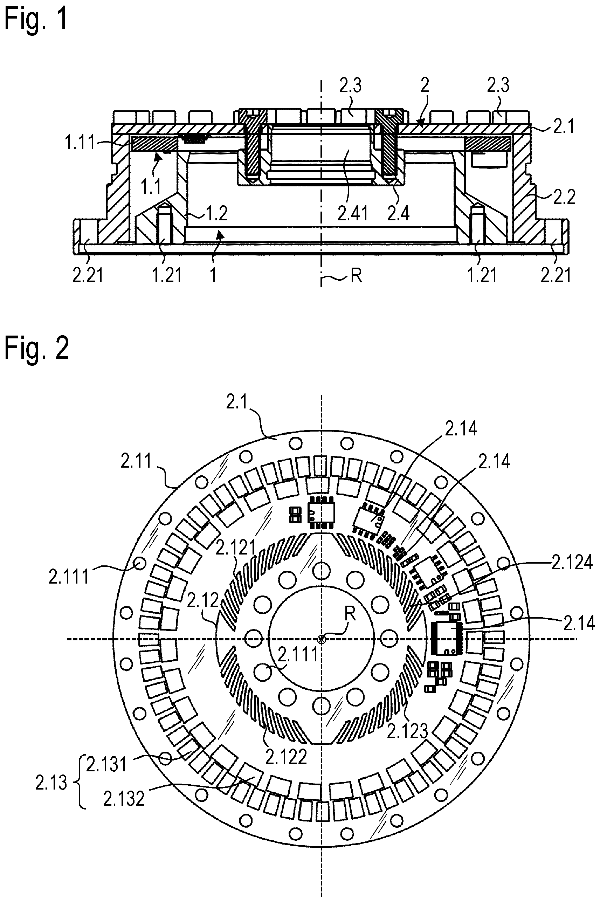

Im vorgestellten ersten Ausführungsbeispiel wird die Erfindung anhand einer Vorrichtung, wie sie beispielsweise in der Figur 1 gezeigt ist, beschrieben. Die Vorrichtung umfasst eine Messeinrichtung, die eine erste Bauteilgruppe 1 und eine zweite Bauteilgruppe 2 umfasst, wobei die erste Bauteilgruppe 1 relativ zur zweiten Bauteilgruppe 2 um eine Achse R drehbar angeordnet ist. Beispielsweise kann die erste Bauteilgruppe 1 als Stator und die zweite Bauteilgruppe 2 als Rotor fungieren.

Die erste Bauteilgruppe 1 umfasst ein so genanntes Abtastbauteil 1.1, das ein erstes Substrat 1.11 aufweist und welches drehfest mit einem ersten Flansch 1.2 verbunden ist. Dem Abtastbauteil 1.1 axial gegenüber liegend befindet sich ein so genanntes Skalenbauteil 2.1, welches der zweiten Bauteilgruppe 2 zuzuordnen ist und drehfest mit einem zweiten Flansch 2.2 und einer Nabe 2.4 verbunden ist.

In der Figur 2 ist eine Draufsicht auf das Skalenbauteil 2.1 gezeigt. Das Skalenbauteil 2.1 umfasst ein zweites Substrat 2.11, das beispielsweise aus einem (insbesondere faserverstärktem) Epoxid-Harz, aus kohlenstofffaserverstärktem Kunststoff oder aus einem Metall insbesondere aus Stahl besteht. Zum Zweck der Befestigung am zweiten Flansch 2.2 weist das Skalenbauteil 2.1 beziehungsweise das zweite Substrat 2.11 Bohrungen 2.111 auf, wobei hier die Bohrungen 2.111 entlang eines inneren Durchmessers und eines äußeren Durchmessers auf Kreislinien angeordnet sind. Mithilfe von Schrauben 2.3 kann das Skalenbauteil 2.1 am äußeren Durchmesser mit dem Flansch 2.2 und am inneren Durchmesser mit der Nabe 2.4 verdrehsicher verbunden werden. Auf dem zweiten Substrat 2.11 ist eine Winkelskala 2.13 aufgebracht, welche zwei Teilungsspuren 2.131, 2.132 umfasst. Die Teilungsspuren 2.131, 2.132 sind kreisförmig ausgebildet und bezüglich der Achse R konzentrisch mit unterschiedlichen Durchmessern auf dem zweiten Substrat 2.11 angeordnet. Die beiden Teilungsspuren 2.131, 2.132 bestehen jeweils aus einer periodischen Abfolge von alternierend angeordneten (durch einen additiven Aufbau aufgebrachten) elektrisch leitfähigen Teilungsbereichen und nichtleitfähigen Teilungsbereichen. Als Material für die elektrisch leitfähigen Teilbereiche wurde im gezeigten Beispiel Kupfer auf das zweite Substrat 2.11 aufgebracht. In den nichtleitfähigen Teilungsbereichen wurde das zweite Substrat 2.11 dagegen nicht beschichtet. Falls das zweite Substrat 2.11 aus einem Metallwerkstoff, etwa aus Stahl, hergestellt ist, wird zwischen den leitfähigen Teilbereichen und dem zweiten Substrat 2.11 eine Kunststoffschicht beispielsweise aus Polyimid vorgesehen.

Außerdem ist auf dem zweiten Substrat 2.11 eine Sensoranordnung 2.12 hier in Form von Leiterbahnen beziehungsweise Leiterbahnstrukturen 2.121, 2.122, 2.123, 2.124 durch einen additiven Aufbau, insbesondere mit Hilfe eines Fotolithografie-Prozesses, aufgebracht.

Falls das zweite Substrat 2.11 aus einem Metallwerkstoff, etwa aus Stahl, hergestellt ist, wird zwischen den leitfähigen Teilbereichen und dem zweiten Substrat 2.11 beziehungsweise zwischen den Leiterbahnstrukturen 2.121, 2.122, 2.123, 2.124 und dem zweiten Substrat 2.11eine Kunststoffschicht beispielsweise aus Polyimid hergestellt.

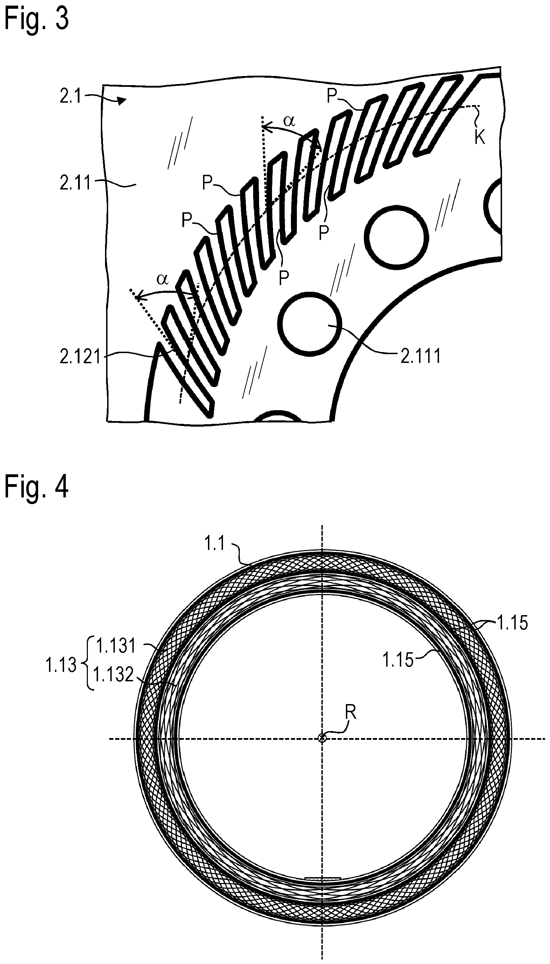

Die Sensoranordnung 2.12 ist im Wesentlichen kreisförmig ausgebildet und bezüglich der Achse R zentrisch angeordnet. Außerdem ist die Sensoranordnung 2.12 beziehungsweise sind die Leiterbahnstrukturen 2.121, 2.122, 2.123, 2.124 in einer Ebene angeordnet, die orthogonal zur Achse R orientiert ist. Insbesondere ist die Sensoranordnung 2.12 bezüglich eines Punktes auf der Achse R punktsymmetrisch ausgestaltet. Die Sensoranordnung 2.12 umfasst Leiterbahnstrukturen 2.121, 2.122, 2.123, 2.124, die beispielsweise aus Kupfer oder Stahl bestehen können. Die Leiterbahnstrukturen 2.121, 2.122, 2.123, 2.124 weisen gemäß der Figur 3 jeweils mehrere Abschnitte P auf, in denen die Leiterbahnstrukturen 2.121, 2.122, 2.123, 2.124 gekrümmt und parallel verlaufen. Im vorgestellten Ausführungsbeispiel verlaufen die Leiterbahnstrukturen 2.121, 2.122, 2.123, 2.124 in den Bereichen der Abschnitte P entlang paralleler Spirallinien, so dass innerhalb der Abschnitte P der Krümmungsradius der Leiterbahnstrukturen 2.121, 2.122, 2.123, 2.124 in Abhängigkeit vom Abstand zur Achse R unterschiedlich ist. Insbesondere schneiden die Leiterbahnstrukturen 2.121, 2.122, 2.123, 2.124 in den Abschnitten P eine Kreislinie K, deren Mittelpunkt auf der Achse R liegt, jeweils in einem gleich großen Winkel α. Im vorgestellten Ausführungsbeispiel beträgt der Winkel α 45°. Folglich verlaufen die Leiterbahnstrukturen 2.121, 2.122, 2.123, 2.124 in den Abschnitten P jeweils gemäß den Gesetzmäßigkeiten einer logarithmischen Spirale. Jede Tangente an der Kreislinie K schneidet die logarithmische Spirale stets unter dem gleichen Winkel α (Isogonaltrajektorie), wobei diese Eigenschaft für beliebige Kreislinien mit unterschiedlichen Radien, deren gemeinsamer Mittelpunkt auf der Achse R liegt, zutrifft. Die Leiterbahnstrukturen 2.121, 2.122, 2.123, 2.124 verlaufen in den Abschnitten P daher gemäß einer gleichwinkligen Spirale. Im vorgestellten Ausführungsbeispiel ist die gleichwinklige beziehungsweise logarithmische Spirale und damit der Verlauf der Leiterbahnstrukturen 2.121, 2.122, 2.123, 2.124 in den Abschnitten P eindeutig durch den Winkel α = 45° charakterisiert. Die Leiterbahnstrukturen 2.121, 2.122, 2.123, 2.124 sind so miteinander verschaltet angeordnet, dass diese eine Wheatstone'sche Brücke bilden.

Zudem sind auf dem zweiten Substrat 2.11 elektronische Bauelemente 2.14 montiert (Figur 2), die dazu dienen die Sensoranordnung 2.12 mit einer geeigneten elektrischen Spannung beziehungsweise einem geeigneten elektrischen Strom zu versorgen und andererseits die von den Leiterbahnstrukturen 2.121, 2.122, 2.123, 2.124 erzeugten Signale beziehungsweise Widerstandswerte weiterzuverarbeiten. Da es sich hier um eine passive Sensoranordnung 2.12 handelt, ist eine Versorgung der Sensoranordnung 2.12 mit Hilfsenergie zwingend erforderlich.

Das in Figur 4 gezeigte zur Abtastung des Skalenbauteils 2.1 vorgesehene Abtastbauteil 1.1 umfasst ein Abtastelement 1.13. Dieses umfasst hier zwei Empfängerleiterbahnen in einer äußeren ersten Empfängerspur 1.131 und zwei Empfängerleiterbahnen in einer inneren zweiten Empfängerspur 1.132. Die zusammengehörigen Paare von Empfängerleiterbahnen einer jeweiligen Empfängerspur 1.131, 1.132 sind hierbei relativ zueinander versetzt (hier insbesondere gleichmäßig zueinander versetzt) angeordnet.

Darüber hinaus sind als Erregerspulen an dem Abtastbauteil 1.1 Erregerleiterbahnen 1.15 vorgesehen, welche auf einer inneren, einer mittleren und einer äußeren Erregerspur aufgebracht sind. Das Abtastbauteil 1.1 selbst ist ringförmig ausgestaltet und weist folglich eine zentrische Bohrung auf.

Mithilfe von Gewindebohrungen 1.21 kann am ersten Flansch 1.2, welcher dem Stator zugeordnet werden kann, ein erstes Maschinenelement befestigt werden. Die Nabe 2.4 weist eine mittige Öffnung 2.41 auf, in welche eine Antriebswelle eingeführt werden kann, die drehfest mit der Nabe 2.4 verbunden werden kann. Auf diese Weise kann eine Drehbewegung in die Nabe 2.4 und damit auch in das Skalenbauteil 2.1 eingeleitet werden. Die Nabe 2.4 und der zweite Flansch 2.2 sind über das Skalenbauteil 2.1 miteinander verbunden. Mithilfe von Bohrungen 2.21 im zweiten Flansch 2.2 kann ein weiteres Maschinenteil am zweiten Flansch 2.2 rotorseitig befestigt werden. Somit kann am zweiten Flansch 2.2 ein abtriebsseitiges Maschinenteil fixiert werden. Im zusammengebauten Zustand des Positionssensors gemäß der Figur 1 stehen sich also das Skalenbauteil 2.1 und das Abtastbauteil 1.1 axial gegenüber, so dass die Achse R durch die Mittelpunkte beider Elemente verläuft und bei einer Relativdrehung zwischen dem Skalenbauteil 2.1 und dem Abtastbauteil 1.1 ein von der jeweiligen Winkelstellung abhängiges Signal durch Induktionseffekte erzeugbar ist.

Zu diesem Zweck wird ein auf dem Abtastbauteil 1.1 montiertes ASIC-Bauteil verwendet, das nicht nur als Auswerteelement, sondern auch als Erregerkontrollelement arbeitet, unter dessen Kontrolle der Erregerstrom, welcher dann durch die Erregerleiterbahnen 1.15 fließt, erzeugt wird. Durch den Erregerstrom werden in den Empfängerleiterbahnen Spannungen in Abhängigkeit von der Winkelstellung des Skalenbauteils 2.1 induziert, wobei diese Spannungen auch als Signale bezeichnet werden können.

Die Empfängerleiterbahnen der äußeren Empfängerspur 1.131 weisen jeweils mehr Windungen auf als die Empfängerleiterbahnen der inneren Empfängerspur 1.132. Zudem weist die äußere Teilungsspur 2.131 mehr elektrisch leitfähige Teilungsbereiche (und mehr nichtleitfähige Teilungsbereiche) auf als die innere Teilungsspur 2.132. Die äußere Teilungsspur 2.131 wird von der äußeren Empfängerspur 1.131 beziehungsweise den zugehörigen Empfängerleiterbahnen abgetastet. Die äußere Empfängerspur 1.131 liefert ein vergleichsweise hoch auflösendes Inkrementalsignal bei der Drehung des Skalenbauteils 2.1 relativ zum Abtastbauteil 1.1. Dagegen liefert die innere Empfängerspur 1.132 bei der Abtastung der inneren Teilungsspur 2.132 ein vergleichsweise niedriger auflösendes Inkrementalsignal. Bei gleicher Relativdrehung zwischen dem Abtastbauteil 1.1 und dem Skalenbauteil 2.1 wird durch die Empfängerleiterbahnen der inneren Empfängerspur 1.132 eine geringere Anzahl von Signalperioden erzeugt als durch die Empfängerleiterbahnen der äußeren Empfängerspur 1.131. Durch Zusammensetzen der Inkrementalsignale kann eine absolute Winkelinformation erzeugt werden.

Durch die Messeinrichtung ist aber nicht nur eine Winkelstellung bestimmbar, sondern auch ein Drehmoment. Zu diesem Zweck sind am Skalenbauteil 2.1 beziehungsweise auf dem zweiten Substrat 2.11 die Leiterbahnstrukturen 2.121, 2.122, 2.123, 2.124 (durch einen additiven Aufbau) aufgebracht. Besonders vorteilhaft ist es, wie im beschriebenen Ausführungsbeispiel, wenn der additive Aufbau der Leiterbahnstrukturen 2.121, 2.122, 2.123, 2.124 nach demselben Prinzip erfolgt wie der additive Aufbau der elektrisch leitfähigen Teilungsbereiche der Winkelskala 2.13. Die Leiterbahnstrukturen 2.121, 2.122, 2.123, 2.124 liegen in Bezug auf die Achse R radial innen relativ zur Winkelskala 2.13. Somit ist der Abstand zwischen den Leiterbahnstrukturen 2.121, 2.122, 2.123, 2.124 und der Achse R kleiner als der Abstand zwischen der Winkelskala 2.13 und der Achse R.

Das Skalenbauteil 2.1 kann mit elektrischer Energie versorgt werden. Dies kann beispielsweise über ein Kabel (sofern die Anzahl der möglichen Umdrehungen begrenzt ist), über einen Schleifring oder auch drahtlos erfolgen. Im Betrieb der Messeinrichtung wird ein definierter Strom durch die passive Sensoranordnung 2.12, die auf dem Skalenbauteil 2.1 angeordnet ist und somit im vorgestellten Ausführungsbeispiel dem Rotor zuzuordnen ist, geleitet. Dadurch, dass die Antriebskräfte durch das Skalenbauteil 2.1 hindurch geleitet werden entsteht, wenn auch eine äußerst geringe, Verformung des Skalenbauteils 2.1. In Abhängigkeit von der Verformung des zweiten Substrats 2.11 aufgrund einer Torsionsbelastung ändern sich die Widerstände in den Leiterbahnstrukturen 2.121, 2.122, 2.123, 2.124. Unter Nutzung dieses Effektes kann durch die passive Sensoranordnung 2.12 eine Torsionsbelastung des zweiten Substrats 2.11 bestimmt werden, wobei eine Torsion um die Achse R vorliegt. Durch die elektronischen Bauelemente 2.14 werden Signale erzeugt, die beispielsweise drahtlos zum Abtastbauteil 1.1 übertragen werden. Diese Signale enthalten eine Information bezüglich der Torsionsbelastung des Skalenbauteils 2.1 und können zusammen mit den Signalen, welche die Information bezüglich der relativen Winkelstellung zwischen dem Skalenbauteil 2.1 und dem Abtastbauteil 1.1 beinhalten zu einer Folgeelektronik übertragen werden.

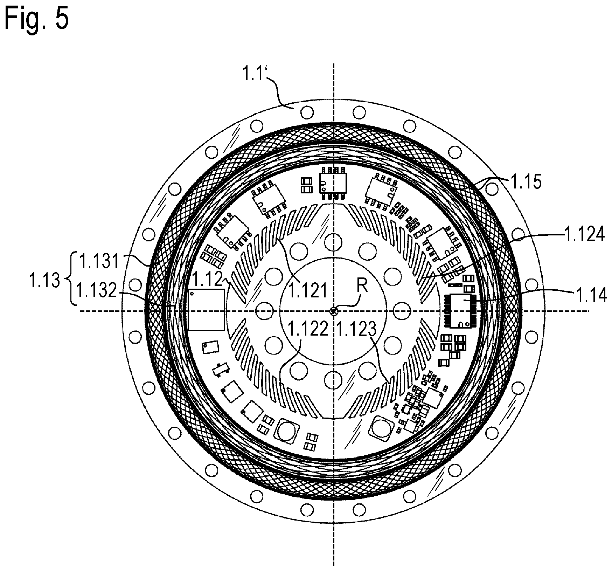

In der Figur 5 ist ein zweites Ausführungsbeispiel für eine erfindungsgemäße Messeinrichtung dargestellt. Im Unterschied zum ersten Ausführungsbeispiel weist dort ein Abtastbauteil 1.1' sowohl eine passive Sensoranordnung 1.12 als auch ein Abtastelement 1.13 auf. In diesem zweiten Ausführungsbeispiel kann die Verformung des Abtastbauteils 1.1' infolge eines Torsionsmomentes um die Achse R bestimmt werden. Voraussetzung hierfür ist natürlich, dass das Abtastbauteil 1.1' so in einer Vorrichtung montiert wurde, dass ein entsprechender Kraftfluss durch das Abtastbauteil 1.1' verläuft. Das Abtastbauteil 1.1' weist eine Reihe von elektronischen Bauelementen 1.14 auf, welche zur Versorgung der Erregerleiterbahnen 1.15 sowie der Leiterbahnstrukturen 1.121, 1.122, 1.123, 1.124 der passiven Sensoranordnung 1.12 dienen. Darüber hinaus dienen die elektronischen Bauelemente 1.14 auch zur Aufbereitung der betreffenden Signale bezüglich der Torsionsmoment- und der Winkelinformation. Die Leiterbahnstrukturen 1.121, 1.122, 1.123, 1.124 liegen in Bezug auf die Achse R radial innen relativ zum Abtastelement 1.13 (beziehungsweise zu den Empfängerspuren 1.131, 1.132). Somit ist der Abstand zwischen den Leiterbahnstrukturen 1.121, 1.122, 1.123, 1.124 und der Achse R kleiner als der Abstand zwischen dem Abtastelement 1.13 und der Achse R.

## Patentansprüche

1. Messeinrichtung umfassend eine erste Bauteilgruppe (1) und eine zweite Bauteilgruppe (2), wobei die Bauteilgruppen (1, 2) relativ zueinander um eine Achse (R) drehbar angeordnet sind, wobei
die erste Bauteilgruppe (1) ein Abtastbauteil (1.1; 1.1') aufweist, welches ein erstes Substrat (1.11) aufweist, und
die zweite Bauteilgruppe (2) ein Skalenbauteil (2.1) aufweist, welches ein zweites Substrat (2.11) und eine Winkelskala (2.13) aufweist, so dass
durch die Messeinrichtung eine relative Winkelstellung zwischen der ersten Bauteilgruppe (1) und der zweiten Bauteilgruppe (2) bestimmbar ist, **dadurch gekennzeichnet, dass**
die Messeinrichtung zudem eine passive Sensoranordnung (1.12; 2.12) aufweist, welche Leiterbahnstrukturen (1.121, 1.122, 1.123, 1.124; 2.121, 2.122, 2.123, 2.124) aufweist, wobei
- am Abtastbauteil (1.1; 1.1') die Leiterbahnstrukturen (1.121, 1.122, 1.123, 1.124; 2.121) durch einen additiven Aufbau auf dem ersten Substrat (1.11) aufgebracht sind, so dass durch die Sensoranordnung (1.12) eine Torsionsbelastung des ersten Substrats (1.11) um die Achse (R) bestimmbar ist, oder
- am Skalenbauteil (2.1) die Leiterbahnstrukturen (2.121, 2.122, 2.123, 2.124) durch einen additiven Aufbau auf dem zweiten Substrat (2.11) aufgebracht sind, so dass durch die Sensoranordnung (2.12) eine Torsionsbelastung des zweiten Substrats (2.11) um die Achse (R) bestimmbar ist.

2. Messeinrichtung gemäß dem Anspruch 1, wobei die Leiterbahnstrukturen (1.121, 1.122, 1.123, 1.124; 2.121, 2.122, 2.123, 2.124) jeweils mehrere Abschnitte (P) aufweisen, in denen die Leiterbahnstrukturen (1.121, 1.122, 1.123, 1.124; 2.121, 2.122, 2.123, 2.124) gekrümmt verlaufen.

3. Messeinrichtung gemäß dem Anspruch 2, wobei die Leiterbahnstrukturen (1.121, 1.122, 1.123, 1.124; 2.121, 2.122, 2.123, 2.124) in den Abschnitten (P) parallel verlaufen.

4. Messeinrichtung gemäß dem Anspruch 2, wobei der Krümmungsradius in Abhängigkeit vom Abstand zur Achse (R) unterschiedlich ist.

5. Messeinrichtung gemäß dem Anspruch 4, wobei die Leiterbahnstrukturen (1.121, 1.122, 1.123, 1.124; 2.121, 2.122, 2.123, 2.124) in den Abschnitten (P) Kreislinien (K), deren Mittelpunkt auf der Achse (R) liegt, jeweils in einem gleich großen Winkel (α) schneiden.

6. Messeinrichtung gemäß dem Anspruch 5, wobei der Winkel (α) zwischen 20° und 70° beträgt.

7. Messeinrichtung gemäß einem der vorhergehenden Ansprüche, wobei die Torsionsbelastung durch Bestimmung des Widerstandes der Leiterbahnstrukturen (1.121, 1.122, 1.123, 1.124; 2.121, 2.122, 2.123, 2.124) bestimmbar ist.

8. Messeinrichtung gemäß einem der vorhergehenden Ansprüche, wobei die Sensoranordnung (1.12; 2.12) vier Leiterbahnstrukturen (1.121, 1.122, 1.123, 1.124; 2.121, 2.122, 2.123, 2.124) umfasst, die gemäß einer Brückenschaltung verschaltet sind.

9. Messeinrichtung gemäß einem der vorhergehenden Ansprüche, wobei auf dem ersten Substrat (1.11) eine Erregerleiterbahn (1.15) sowie als Abtastelement (1.13) eine Empfängerspur (1.131, 1.132) mit mehreren Empfängerleiterbahnen angeordnet sind.

10. Messeinrichtung gemäß einem der vorhergehenden Ansprüche, wobei auf dem ersten Substrat (1.11) zumindest ein elektronisches Bauelement (1.14) angeordnet ist, durch welches Signale, die vom Abtastbauteil (1.1; 1.1`) erzeugbar sind, weiterverarbeitbar sind.

11. Messeinrichtung gemäß einem der vorhergehenden Ansprüche, wobei die Winkelskala (2.13) aus alternierend angeordneten, elektrisch leitfähigen und nichtleitfähigen Teilungsbereichen besteht, die auf dem zweiten Substrat (2.11) angeordnet sind.

12. Messeinrichtung gemäß einem der vorhergehenden Ansprüche, wobei das erste Substrat (1.11) und / oder das zweite Substrat (2.11) aus Kunststoff hergestellt sind.

13. Messeinrichtung gemäß einem der vorhergehenden Ansprüche, wobei das erste Substrat (1.11) und / oder das zweite Substrat (2.11) aus Metall hergestellt sind.

14. Messeinrichtung gemäß einem der vorhergehenden Ansprüche, wobei am Abtastbauteil (1.1') die Leiterbahnstrukturen (1.121, 1.122, 1.123, 1.124) bezüglich der Achse (R) radial innen liegend relativ zu einem Abtastelement (1.13) durch einen additiven Aufbau auf dem ersten Substrat (1.11) aufgebracht sind, so dass durch die Sensoranordnung (1.12) eine Torsionsbelastung des ersten Substrats (1.11) um die Achse (R) bestimmbar ist.

15. Messeinrichtung gemäß einem der vorhergehenden Ansprüche, wobei am Skalenbauteil (2.1) die Leiterbahnstrukturen (2.121, 2.122, 2.123, 2.124) bezüglich der Achse (R) radial innen liegend relativ zur Winkelskala (2.13) durch einen additiven Aufbau auf dem zweiten Substrat (2.11) aufgebracht sind, so dass durch die Sensoranordnung (2.12) eine Torsionsbelastung des zweiten Substrats (2.11) um die Achse (R) bestimmbar ist.

## Claims

1. Measuring device comprising a first component group (1) and a second component group (2), wherein the component groups (1, 2) are arranged so as to be rotatable relative to one another about an axis (R), wherein
the first component group (1) has a scanning component (1.1; 1.1') having a first substrate (1.11), and
the second component group (2) has a scale component (2.1) having a second substrate (2.11) and an angle scale (2.13), such that
a relative angular position between the first component group (1) and the second component group (2) is determinable by the measuring device, **characterized in that**
the measuring device additionally has a passive sensor arrangement (1.12; 2.12) having conductor trace structures (1.121, 1.122, 1.123, 1.124, 2.121, 2.122, 2.123, 2.124) wherein
- on the scanning component (1.1; 1.1'), the conductor trace structures (1.121, 1.122, 1.123, 1.124; 2.121) are applied by way of an additive construction on the first substrate (1.11), such that a torsional load of the first substrate (1.11) about the axis (R) is determinable by the sensor arrangement (1.12), or
- on the scale component (2.1), the conductor trace structures (2.121, 2.122, 2.123, 2.124) are applied by way of an additive construction on the second substrate (2.11), such that a torsional load of the second substrate (2.11) about the axis (R) is determinable by the sensor arrangement (2.12).

2. Measuring device according to Claim 1, wherein the conductor trace structures (1.121, 1.122, 1.123, 1.124; 2.121, 2.122, 2.123, 2.124) each have a plurality of portions (P) in which the conductor trace structures (1.121, 1.122, 1.123, 1.124; 2.121, 2.122, 2.123, 2.124) extend in a curved fashion.

3. Measuring device according to Claim 2, wherein the conductor trace structures (1.121, 1.122, 1.123, 1.124; 2.121, 2.122, 2.123, 2.124) extend parallel in the portions (P).

4. Measuring device according to Claim 2, wherein the radius of curvature differs depending on the distance from the axis (R).

5. Measuring device according to Claim 4, wherein the conductor trace structures (1.121, 1.122, 1.123, 1.124; 2.121, 2.122, 2.123, 2.124) in the portions (P) intersect circular lines (K) the centre point of which lies on the axis (R), in each case at an angle (α) of the same magnitude.

6. Measuring device according to Claim 5, wherein the angle (α) is between 20° and 70°.

7. Measuring device according to any of the preceding claims, wherein the torsional load is determinable by determining the resistance of the conductor trace structures (1.121, 1.122, 1.123, 1.124; 2.121, 2.122, 2.123, 2.124).

8. Measuring device according to any of the preceding claims, wherein the sensor arrangement (1.12; 2.12) comprises four conductor trace structures (1.121, 1.122, 1.123, 1.124; 2.121, 2.122, 2.123, 2.124) interconnected in accordance with a bridge circuit.

9. Measuring device according to any of the preceding claims, wherein an excitation conductor trace (1.15) and, as scanning element (1.13), a receiver track (1.131, 1.132) having a plurality of receiver conductor traces are arranged on the first substrate (1.11) .

10. Measuring device according to any of the preceding claims, wherein at least one electronic component (1.14) is arranged on the first substrate (1.11) and enables further processing of signals that are able to be generated by the scanning component (1.1; 1.1') .

11. Measuring device according to any of the preceding claims, wherein the angle scale (2.13) consists of alternatively arranged, electrically conductive and non-conductive graduation regions arranged on the second substrate (2.11).

12. Measuring device according to any of the preceding claims, wherein the first substrate (1.11) and/or the second substrate (2.11) are/is produced from plastic.

13. Measuring device according to any of the preceding claims, wherein the first substrate (1.11) and/or the second substrate (2.11) are/is produced from metal.

14. Measuring device according to any of the preceding claims, wherein on the scanning component (1.1'), the conductor trace structures (1.121, 1.122, 1.123, 1.124) are applied radially inwardly relative to a scanning element (1.13) with respect to the axis (R) by way of an additive construction on the first substrate (1.11) such that a torsional load of the first substrate (1.11) about the axis (R) is determinable by the sensor arrangement (1.12).

15. Measuring device according to any of the preceding claims, wherein on the scale component (2.1), the conductor trace structures (2.121, 2.122, 2.123, 2.124) are applied radially inwardly relative to the angle scale (2.13) with respect to the axis (R) by way of an additive construction on the second substrate (2.11) such that a torsional load of the second substrate (2.11) about the axis (R) is determinable by the sensor arrangement (2.12).

## Revendications

1. Dispositif de mesure, comprenant un premier groupe de composants (1) et un deuxième groupe de composants (2), dans lequel les groupes de composants (1, 2) sont disposés de manière à pouvoir tourner l'un par rapport à l'autre autour d'un axe (R), dans lequel
le premier groupe de composants (1) présente un composant de balayage (1.1 ; 1.1') qui présente un premier substrat (1.11), et
le deuxième groupe de composants (2) présente un composant de cadran (2.1) qui présente un deuxième substrat (2.11) et une échelle angulaire (2.13) de sorte que le dispositif de mesure permet de déterminer une position angulaire relative entre le premier groupe de composants (1) et le deuxième groupe de composants (2),
**caractérisé en ce que** le dispositif de mesure présente en outre un agencement de capteur passif (1.12 ; 2.12) qui présente des structures de pistes conductrices (1.121, 1.122, 1.123, 1.124 ; 2.121, 2.122, 2.123, 2.124), dans lequel
- au niveau du composant de balayage (1.1 ; 1.1'), les structures de pistes conductrices (1.121, 1.122, 1.123, 1.124 ; 2.121) sont appliquées par une construction additive sur le premier substrat (1.11) de sorte que l'agencement de capteur (1.12) permet de déterminer une sollicitation en torsion du premier substrat (1.11) autour de l'axe (R), ou
- au niveau du composant de cadran (2.1), les structures de pistes conductrices (2.121, 2.122, 2.123, 2.124) sont appliquées par une construction additive sur le deuxième substrat (2.11) de sorte que l'agencement de capteur (2.12) permet de déterminer une sollicitation en torsion du deuxième substrat (2.11) autour de l'axe (R).

2. Dispositif de mesure selon la revendication 1, dans lequel les structures de pistes conductrices (1.121, 1.122, 1.123, 1.124 ; 2.121, 2.122, 2.123, 2.124) présentent respectivement plusieurs sections (P) dans lesquelles les structures de pistes conductrices (1.121, 1.122, 1.123, 1.124 ; 2.121, 2.122, 2.123, 2.124) s'étendent de manière courbe.

3. Dispositif de mesure selon la revendication 2, dans lequel les structures de pistes conductrices (1.121, 1.122, 1.123, 1.124 ; 2.121, 2.122, 2.123, 2.124) s'étendent en parallèle dans les sections (P).

4. Dispositif de mesure selon la revendication 2, dans lequel le rayon de courbure est différent en fonction de la distance par rapport à l'axe (R).

5. Dispositif de mesure selon la revendication 4, dans lequel les structures de pistes conductrices (1.121, 1.122, 1.123, 1.124 ; 2.121, 2.122, 2.123, 2.124) croisent dans les sections (P) des circonférences (K) dont le centre est situé sur l'axe (R), respectivement selon un angle (α) identique.

6. Dispositif de mesure selon la revendication 5, dans lequel l'angle (α) est compris entre 20° et 70°.

7. Dispositif de mesure selon l'une quelconque des revendications précédentes, dans lequel la sollicitation en torsion peut être déterminée par la détermination de la résistance des structures de pistes conductrices (1.121, 1.122, 1.123, 1.124 ; 2.121, 2.122, 2.123, 2.124).

8. Dispositif de mesure selon l'une quelconque des revendications précédentes, dans lequel l'agencement de capteur (1.12 ; 2.12) comprend quatre structures de pistes conductrices (1.121, 1.122, 1.123, 1.124 ; 2.121, 2.122, 2.123, 2.124) qui sont connectées dans un circuit en pont.

9. Dispositif de mesure selon l'une quelconque des revendications précédentes, dans lequel une piste conductrice d'excitation (1.15), ainsi que comme élément de balayage (1.13) une piste réceptrice (1.131, 1.132) pourvue de plusieurs pistes conductrices réceptrices sont disposées sur le premier substrat (1.11).

10. Dispositif de mesure selon l'une quelconque des revendications précédentes, dans lequel sur le premier substrat (1.11) est disposé au moins un composant électronique (1.14) qui permet de générer des signaux qui sont traités par le composant de balayage (1.1 ; 1.1') .

11. Dispositif de mesure selon l'une quelconque des revendications précédentes, dans lequel l'échelle angulaire (2.13) est composée de zones de graduation électriquement conductrices et non conductrices, disposées en alternance, qui sont disposées sur le deuxième substrat (2.11).

12. Dispositif de mesure selon l'une quelconque des revendications précédentes, dans lequel le premier substrat (1.11) et/ou le deuxième substrat (2.11) sont fabriqués en matière plastique.

13. Dispositif de mesure selon l'une quelconque des revendications précédentes, dans lequel le premier substrat (1.11) et/ou le deuxième substrat (2.11) sont fabriqués en métal.

14. Dispositif de mesure selon l'une quelconque des revendications précédentes, dans lequel au niveau du composant de balayage (1.1'), les structures de pistes conductrices (1.121, 1.122, 1.123, 1.124) sont appliquées en étant situées radialement à l'intérieur par rapport à l'axe (R) relativement à un élément de balayage (1.13) par une construction additive sur le premier substrat (1.11) de sorte que l'agencement de capteur (1.12) permet de déterminer une sollicitation en torsion du premier substrat (1.11) autour de l'axe (R) .

15. Dispositif de mesure selon l'une quelconque des revendications précédentes, dans lequel au niveau du composant de cadran (2.1), les structures de pistes conductrices (2.121, 2.122, 2.123, 2.124) sont appliquées en étant situées radialement à l'intérieur par rapport à l'axe (R) relativement à l'échelle angulaire (2.13) par une construction additive sur le deuxième substrat (2.11) de sorte que l'agencement de capteur (2.12) permet de déterminer une sollicitation en torsion du deuxième substrat (2.11) autour de l'axe (R) .
